Europäisches Patentamt

European Patent Office

Office européen des brevets

(19)

(11) Numéro de publication: **0 461 246 B1**

(12) **FASCICULE DE BREVET EUROPEEN**

(45) Date de publication de fascicule du brevet: **09.08.95**   (51) Int. Cl.6: **C08F 8/26**, C08F 14/00

(21) Numéro de dépôt: **91902709.4**

(22) Date de dépôt: **28.12.90**

(86) Numéro de dépôt internationale :
**PCT/FR90/00968**

(87) Numéro de publication internationale :
**WO 91/09884 (11.07.91 91/15)**

(54) **PROCEDE DE GREFFAGE DE FONCTIONS SUR DES (CO)POLYMERES CHLORES, COMPOSITIONS ET OBJETS CONFORMES.**

(30) Priorité: **28.12.89 FR 8917359**

(43) Date de publication de la demande:
**18.12.91 Bulletin  91/51**

(45) Mention de la délivrance du brevet:
**09.08.95 Bulletin  95/32**

(84) Etats contractants désignés:
**AT BE CH DE DK ES FR GB GR IT LI LU NL SE**

(56) Documents cités:
**EP-A- 0 101 541**
**US-A- 3 494 905**

**CHEMICAL ABSTRACTS, vol. 77, no. 14, 02 octobre 1972 Columbus, Ohio, USA J. Masoijdek: "Substitution reactions of poly(vinyl chloride)" ref. no. 88846D**

(73) Titulaire: **CENTRE NATIONAL DE LA RECHERCHE SCIENTIFIOUE (CNRS)**
**15, Ouai Anatole France**
**F-75700 Paris Cedex 07 (FR)**

Titulaire: **SOTRA Industries**
**25 rue de Brévillers**
**F-62140 Sainte Austreberthe (FR)**

(72) Inventeur: **GONDARD, Christian**
**4, résidence Edgar-Ouinet**
**F-42300 Roannes (FR)**
Inventeur: **MICHEL, Alain**
**65, rue Henri-Gorjus**
**F-69004 Lyon (FR)**

(74) Mandataire: **Rinuy, Santarelli**
**14, avenue de la Grande Armée**
**F-75017 Paris (FR)**

Rank Xerox (UK) Business Services
(3.10/3.09/3.3.3)

## Description

La présente invention concerne un procédé de greffage de fonctions sur des polymères ou copolymère chlorés, des compositions et des objets conformés.

La fonctionnalisation (ou greffage de fonctions chimiques) des polymères thermoplastiques durant leur mise en oeuvre est une voie avantageuse pour leur apporter de nouvelles propriétés telles que l'adhésion, l'aptitude à fixer de façon irréversible des colorants ou l'amélioration de la compatibilité avec d'autres polymères. Elle permet aussi l'apport de photostabilisants ou d'additifs d'origine organique ou minérale tels que des charges. Elle permet aussi notamment la post-réticulation.

La voie de la fonctionnalisation des polymères chlorés par copolymérisation de monomères fonctionnalisés présente des inconvénients majeurs tels que la perturbation du génie chimique des procédés de polymérisation en conduisant à des processus d'agglomération et en modifiant la morphologie des particules. Cette voie oblige généralement les producteurs à préparer des lots spéciaux en fonction du comonomère et de sa teneur dans le copolymère.

La voie de la fonctionnalisation par voie photochimique du poly(chlorure de vinyle) par bombardement électronique ou par irridiation gamma en soumettant le polymère à ces radiations en présence d'un monomère tel que par exemple, un acrylate d'éthyle 2 hexyle présente l'inconvénient d'entraîner sa dégradation par élimination de chlorure d'hydrogène.

La voie chimique par réaction de substitution nucléophile des atomes de chlore de polymère chloré par des composés soufrés présente également l'inconvénient de rendre ledit copolymère très sensible aux rayonnements UV qui initient les réactions de dégradation radicalaire dont la phase d'amorçage est la coupure radicalaire de ponts disulfure toujours présent comme impureté dans ces composés.

Le greffage de fonctions alcoxysilane sur le polyéthylène ou sur les copolymères de l'éthylène et d'un acrylate d'alkyle puis leur réticulation par réaction de condensation des alcoxysilanes en présence d'eau est décrite dans la littérature, pour le polyéthylène par exemple dans le brevet américain 1 286 460 ou dans les brevets américains 106 502, 4 291 136 ou 4 328 323 pour les copolymères de l'éthylène et d'un acrylate d'alkyle.

Il est connu également que des groupements alcoxysilanes peuvent être greffés sur le polychlorure de vinyle en cours d'opérations de mise en oeuvre à l'état fondu en présence soit d'aminoalcoxysilane (GILBERT Polymer Communications Vol. 31, pages 194-197, 1990), soit en présence de mercaptoalcoxysilane (KELNAR et SCHATZ Preprints 31ème Microsymposium sur les Macromolécules PVC Prague, 18/21 juillet 1988). Une fois greffé, le polymère est réticulable en présence d'eau. Dans le premier cas la basicité de l'aminoalcoxysilane sensibilise le polymère à la dégradation et dans le second cas, la présence de mercaptans sensibilise le polymère au vieillissement photochimique.

L'hydroxylation de copolymères éthylèneacétate de vinyle durant une phase d'extrusion par transestérification des groupements acétate en présence d'un alcool est décrite dans la littérature.

En revanche, la seule voie utilisée jusqu'à maintenant pour l'hydroxylation des polymères chlorés ou copolymères chlorés tels que par exemple le polychlorure de vinyle, est la copolymérisation du chlorure de vinyle et de monomères vinyliques fonctionnalisés comportant des fonctions alcools tels que des esters acryliques ou méthacryliques. Une autre voie possible est l'hydrolyse des fonctions acétate d'un (co)polymère chloré et d'acétate de vinyle mais cette hydrolyse ne peut être effectuée dans une opération de mise en oeuvre telle que l'extrusion, le calandrage, l'injection ou l'enduction.

Il serait très intéressant de pouvoir fonctionnaliser les polymères et copolymères chlorés et plus particulièrement de façon non limitative le poly(chlorure de vinyle) par des fonctions alcoxysilanes soit au moment de la mise en oeuvre dans le procédé d'extrusion, de calandrage, d'enduction ou d'injection et en l'absence de solvant soit par la technique dry-brend, soit en suspension dans un liquide organique, avantageusement dans un hydrocarbure en maîtrisant le taux de fonctionnalisation en fonction de l'application visée.

Il serait aussi très intéressant de pouvoir fonctionnaliser les polymères et (co)polymères chlorés et plus particulièrement le polychlorure de vinyle par des fonctions hydroxyle au moment de la mise en oeuvre dans les procédés d'extrusion, de calandrage, d'enduction ou d'injection et en l'absence de solvant, en maîtrisant le taux de fonctionnalisation en fonction de l'application visée.

C'est pourquoi, la présente demande a pour objet un procédé de fonctionnalisation de polymères ou (co)polymères chlorés ci-après (co)polymères chlorés, caractérisé en ce que l'on fait réagir à une température de 50 à 250 °C ledit (co)polymère chloré avec un dérivé organométallique de formule (I).

$(R)_n M(AR_1 B)_{m-n}$

dans laquelle

M représente un atome de plomb, d'antimoine ou de bismuth et de préférence un atome d'étain,

A représente

- soit un groupement NR₃ dans lequel R₃ représente un atome d'hydrogène ou un radical R₁ B

- soit un atome d'oxygène,

m est égal à 4 et n est égal à 1, 2 ou 3 lorsque M représente l'étain ou le plomb.

m est égal à 5 et n est égal à 1, 2, 3 ou 4 lorsque M représente le bismuth ou l'antimoine.

R représente un radical alcoyle linéaire ou ramifié renfermant de 1 à 8 atomes de carbone, un radical cycloalcoyle renfermant de 3 à 12 atomes de carbone, un radical aryle renfermant de 6 à 14 atomes de carbone éventuellement substitué, un radical aralcoyle renfermant de 7 à 14 atomes de carbone éventuellement substitué ou un radical cycloalcoylalcoyle renfermant de 4 à 8 atomes de carbone.

R¹ représente un radical alcoyle linéaire ou ramifié renfermant de 1 à 20 atomes de carbone, un radical aralcoyle renfermant de 7 à 14 atomes de carbone, un radical cycloalcoyle renfermant de 3 à 12 atomes de carbone, un radical cycloalcoylalcoyle renfermant de 4 à 8 atomes de carbone éventuellement substitué ou un radical arylcycloalcoyle renfermant de 7 à 20 atomes de carbone ou une chaîne polymère, ledit radical R₁ étant éventuellement fonctionnalisé, et

B représente un radical-Si (OR₂)₃, R₂ pouvant prendre les valeurs de R ci-dessus, mais de préférence méthyle ou éthyle, ou un radical-(OH)ₓ dans lequel x représente un nombre entier pouvant prendre les valeurs de 1 à 100 et de préférence de 1 à 10, ledit radical (OH)ₓ étant un polyol tel que l'éthylène glycol , le triméthylolpropane ou le pentaérythrol.

Par "dérivé organométallique", on entend que le radical R est lié à l'atome métallique par l'intermédiaire d'une liaison métal-carbone de type covalent et l'atome d'azote ou d'oxygène est également lié à l'atome de métal par une liaison covalente.

L'expression "radical alcoyle linéaire ou ramifié" désigne de préférence un radical méthyle, éthyle, n-butyle ou n-octyle.

L'expression "radical cycloalcoyle renfermant de 3 à 6 atomes de carbone" désigne de préférence un radical cyclopropyle, cyclobutyle ou cyclohexyle.

L'expression "radical aryle renfermant de 6 à 14 atomes de carbone" désigne de préférence un radical phényle.

L'expression "radical aralcoyle renfermant de 7 à 14 atomes de carbone" désigne de préférence un radical benzyle ou phénéthyle.

L'expression "radical cycloalcoylalcoyle renfermant de 4 à 8 atomes de carbone" désigne de préférence un radical cyclopropylméthyle.

Le radical alcoyle linéaire ou ramifié comportant de 1 à 20 atomes de carbone renferme de préférence de 2 à 6 atomes de carbone.

Lorsqu'un atome de carbone, par exemple d'un radical aryle est substitué, il est de préférence substitué par un radical éthyle, méthyle, méthoxy ou par un atome de chlore.

Lorsque le radical R₁ est fonctionnalisé, l'on entend que le radical que représente R₁ peut éventuellement être substitué par une fonction qui n'est pas susceptible de détruire les réactifs mis en oeuvre, telle qu'une fonction éther ou thioéther.

Selon l'invention, le composé organométallique peut être synthétisé soit préalablement à son introduction dans le (co)polymère, soit in situ.

Dans le cas où B représente un radical Si (OR₂)₃,

- lorsque A représente un atome d'oxygène, le composé organométallique défini précédemment est un alcoolate organométallique de l'étain, du plomb, de l'antimoine ou du bismuth. Sa préparation peut être réalisée préalablement ou in situ, par réaction dans le cas de l'étain par exemple d'un méthoxyorganoétain sur un ester d'un hydroxyalkyl(trialcoxysilane) ; dans un exemple de préparation in situ, on peut faire réagir un oxyde organostannique sur un ester d'un hydroxyalcoyl(trialcoxysilane), et avantageusement l'hydroxypropyltriméthoxysilane. Dans ce cas, et selon l'invention, pour synthétiser le dérivé alcoxyorganométallique, on peut préparer ce composé préalablement à son introduction ou au sein du polymère ou copolymère chloré par réaction du méthacrylate de propyltriméthoxysilane avec un alcoxyorganométal des métaux précédemment cités et avantageusement, généralement avec un alcoolate mono ou polyméthoxy organométallique.

- lorsque A représente un groupement NR₃, le composé organométallique est avantageusement synthétisé préalablement à son introduction dans le (co)polymère. Le composé organométallique de l'étain, du plomb, de l'antimoine ou du bismuth est alors de préférence un composé dérivant d'une molécule comportant une fonction amine et au moins un ou deux groupements trialcoxysilane, par exemple 2, 3 ou 4 tels groupements. Selon la présente invention, on peut citer avantageusement

3

l'aminopropyltriéthoxysilane. Dans ce cas, et selon l'invention, pour synthétiser le dérivé aminoorganométallique, il est nécessaire de préparer ce composé préalablement à son introduction au sein du polymère ou copolymère chloré par réaction de l'aminopropyltriéthoxysilane avec un alcoxyorganométal des métaux précédemment cités, notamment un alcoxyorganoétain, et avantageusement avec un alcoolate mono ou polyméthoxyorganométallique.

Dans le cas où B représente un radical $(OH)_x$,

- lorsque A représente un atome d'oxygène, le composé organométallique défini précédemment est un alcoolate organométallique de l'étain, du plomb, de l'antimoine, du bismuth ou du germanium. Sa préparation peut être réalisée préalablement par réaction d'un oxyde organométallique de l'étain, du plomb, de l'antimoine, du bismuth ou du germanium avec un polyol, de préférence un diol, en excès moléculaire par rapport à l'oxyde métallique.

En revanche, lorsque l'alcoolate organométallique hydroxylant selon la présente invention est préparé in situ, on peut faire réagir :

- soit un oxyde organométallique de l'étain, du plomb, de l'antimoine, du bismuth ou du germanium avec un polyol et de préférence un diol en excès molaire par rapport à l'oxyde organométallique comme précédemment, mais au sein de la matrice polymère ;
- soit un halogénure, de préférence un chlorure ou un bromure, organométallique de l'étain, du plomb, de l'antimoine, du bismuth ou du germanium avec un alcoolate alcalin ou alcalinoterreux.
- lorsque A est un groupement $NR_3$, le composé organométallique de l'étain, du plomb, de l'antimoine, du bismuth ou du germanium est un composé dérivant d'un amino-alcool comportant au moins une fonction alcool, mais pouvant en comporter un nombre supérieur. Selon l'invention, on peut citer avantageusement l'éthanolamine. Dans ce cas, et selon l'invention, pour synthétiser le dérivé amino organométallique, il est nécessaire de préparer ce composé préalablement à son introduction au sein du polymère ou (co)polymère chloré par réaction de l'amino-alcool avec un alcoolate organométallique des métaux précédemment cités et avantageusement avec un alcoolate mono ou polyméthoxy organométallique.

Parmi les polymères chlorés pouvant être mis en oeuvre dans le procédé ci-dessus, on peut citer à titre d'exemple les polyéthylènes ou polypropylènes chlorés, le poly(chlorure de vinylidène), les caoutchoucs chlorés tels que le poly(chloroprène) et de préférence le poly(chlorure de vinyle) ou PVC.

Parmi les copolymères chlorés, on peut citer à titre d'exemple les copolymères du poly(chlorure de vinyle) avec du chlorure de vinylidène ou de l'acétate de vinyle ou d'esters acryliques et méthacryliques comme comonomère.

On peut aussi greffer des groupements alcoxysilane ou hydroxyle sur des mélanges des dits (co)polymères chlorés.

Selon un mode de mise en oeuvre de l'invention, le procédé ci-dessus offre l'intérêt particulier de ne pas nécessiter de solvant pour sa mise en oeuvre et il peut être intégré à tout procédé de mise en oeuvre par extrusion, injection, calandrage ou enduction, le greffage du (co)polymère chloré pouvant être réalisé entre 50 et 250°C à l'état pulvérulent ou à l'état gélifié.

Selon un autre mode de mise en oeuvre de l'invention, le procédé est réalisé en suspension dans un solvant ne détruisant pas ou n'inhibant pas la réaction de greffage tel un solvant de type hydrocarboné comme un alcane ayant de 5 à 15 atomes de carbone, de préférence 12 atomes de carbone et il permet alors d'éliminer, en vue de les recycler, les sous-produits de la réaction du type chlorure organométallique. Dans ces conditions, le greffage peut être réalisé superficiellement sur l'objet fini.

Selon un encore autre mode de mise en oeuvre de l'invention, le procédé est réalisé en solution dans un solvant ne détruisant pas ou n'inhibant pas la réaction de greffage tel des solvants de type éthéré (par exemple le tétrahydrofuranne ou le dioxanne).

Dans des conditions préférentielles de mise en oeuvre du procédé selon la présente invention :

- le dérivé organométallique est un dérivé de l'étain
- le copolymère chloré de départ est le PVC
- la réaction est menée

soit, lorsque A représente l'oxygène, à environ 200°C de préférence entre 170 et 210°C et en l'absence de solvant, par exemple avantageusement au cours d'une opération d'extrusion. De préférence, le composé utilisé est alors un dérivé alcoxyorganostannique,

soit, lorsque A représente un groupement aminé, à une température plus modérée de 50 à 150°C (environ 100° par exemple), dans une technique "dry-blend" consistant à mélanger les additifs liquides à la poudre de manière à travailler sur une poudre sèche, ou en suspension dans un solvant de type hydrocarboné tel que défini ci-dessus, à environ 120°C ou sur le copolymère déjà conformé. Avantageusement, le composé utilisé est alors le dérivé aminoorganostannique. On peut travailler à une température plus élevée, par exemple à 140° C, selon le taux de greffage recherché.

Dans le cas où A représente l'oxygène et B un radical $(OH)_x$, le milieu réactionnel devrait comprendre un excès de fonctions hydroxyle par rapport aux atomes de métal et notamment, on en utilise environ deux fois plus.

Par (co)polymère conformé, l'on entend par exemple un objet conformé à base de ce (co)polymère, tel qu'un profilé.

La présente demande a également pour objet les compositions caractérisées en ce qu'elles renferment un (co)polymère chloré et un dérivé organométallique répondant à la formule I ci-dessus et notamment les compositions caractérisées en ce qu'elles renferment un (co)polymère chloré et un dérivé organométallique qui est un alcoolate organométallique ou aminoorganométallique tel que défini ci-dessus. Ces compositions ont notamment l'aptitude d'être greffables.

Dans le cas où B = $(OH)_x$ et A représente l'oxygène, dans des conditions préférentielles, les compositions hydroxylables renferment un (co)polymère chloré et un oxyde organométallique, et un polyol en excès par rapport audit oxyde organométallique.

Dans d'autres conditions préférentielles, les compositions hydroxylables renferment un halogénure organométallique et un alcoolate alcalin ou alcalinoterreux, lui-même hydroxylé.

La présente demande vise enfin les objets conformés, caractérisés en ce qu'ils comprennent une composition telle que définie ci-dessus ou obtenue par les procédés ci-dessus décrits.

Lorsqu'on dit qu'une composition comprend un certain produit, on entend que celle-ci renferme au moins un produit de ce type, par exemple au moins un polymère chloré.

Les exemples qui suivent illustrent l'invention.

Le tableau I rassemble des exemples de greffage d'aminopropyltriéthoxysilane sur le poly(chlorure de vinyle) par le di(aminopropyltriéthoxysilane) dibutylétain. Le composé organostannique est synthétisé préalable-ment par réaction du diméthoxydibutylétain (0,034 mole, en excès) sur le 3-aminopropyltriethoxysilane (0,067 mole) sous un courant d'azote afin d'éliminer le méthanol formé. Le stabilisant thermique utilisé pour l'essai n° 4 est le dioctylétain dithioglycolate d'iso-octyle à raison de 2 g pour 100 g de polymère.

TABLEAU I

| Greffage de fonctions alcoxysilane sur le PVC par réaction du di(trialcoxysilanepropylamino)dibutylétain | | | | | |
|---|---|---|---|---|---|
| Exemples | concentration fonctions silane ($10^{-6}$ mol./g) | température (°C) | temps (mn) | conditions de greffage | concentration[a] fonctions silane après réaction ($10^{-6}$ mol./g) |
| 1 | 50 | 80 | 20 | mélange à sec | 10.36-11.79 |
| 2 | 50 | 98 | 20 | en suspension dans l'heptane | 13.00-14.64 |
| 3 | 50 | 67 | 20 | en solution dans le tétrahydrofurane | 21.07-26.07 |
| 4 | 10 | 170 | 4 | à l'état fondu à 180°C | |
| Les réactions ont été effectuées sous atmosphère inerte ($N_2$) (sauf pour l'expérience N° 4). | | | | | |

(a) Dosage effectuées par spectroscopie d'émission atomique du silicium sur le résidu de calcination du polymère (avant réticulation et après plusieurs cycles de purification du polymère par dissolution dans du tétrahydrofuranne (THF) et reprécipitation par le méthanol). Deux dosages sont réalisés par échantillon.

Le tableau II rassemble les exemples de greffage d'aminopropyltriéthoxysilane sur le poly(chlorure de vinyle) par l'aminopropyltriéthoxysilanetributylétain. Les essais ont été conduits selon la technique en suspension dans le dodécane. Le composé étain est synthétisé préalablement dans le dodécane (90 ml) par réaction dans un premier temps du monochlorure de tributylétain (0,048 mol.) sur le méthylate de sodium (0,050 mol. en excès) pour synthétiser le méthoxytributylétain. La solution est filtrée pour éliminer le méthylate de sodium en excès et le chlorure de sodium formé. Dans un second temps, on fait réagir le méthoxytributylétain sur l'aminopropyltriéthoxysilane (0,048 mol) sous atmosphère d'azote. On laisse la solution pendant deux heures à température ambiante puis elle est portée à la température de greffage. On introduit 30 g de PVC. Toutes les opérations sont menées sous atmosphère d'azote.

TABLEAU II

| Greffage de fonctions alcoxysilane sur le PVC par réaction du trialcoxysilanepropylaminotributylétain | | | |
|---|---|---|---|
| Exemples | Température °C | Temps mn | % molaire de substitution (a) des atomes de chlore |
| 5 | 100 | 60 | 1,0 |
| 6 | 126 | 60 | 2,3 |
| 7 | 145 | 5 | 1,40 |
| 8 | 145 | 30 | 6,80 |

(a) Dosage effectué par analyse centésimale du chlore et du silicium (avant réticulation et après plusieurs cycles de purification du polymère par dissolution dans du THF et reprécipitation par le méthanol).

Le tableau III illustre un exemple de greffage de l'hydroxypropyltriméthoxysilane sur le poly(chlorure de vinyle) par le di(triméthoxysilane propanoxy)dibutylétain. Le composé oraganostannique est synthétisé préalablement par réaction du diméthoxydibutylétain (0,034 mole) sur le triméthoxysilane propylméthacrylate (17,42 g ; 0,070 mole, en excès) sous un courant d'azote afin d'éliminer le méthylméthacrylate formé. On a utilisé de plus du dioctylétain dithioglycolate d'iso-octyle à raison de 2 g pour 100 g de polymère à titre de stabilisant thermique.

TABLEAU III

| Greffage de fonctions alcoxysilane sur le PVC par réaction du bis-(trialcoxysilanepropyloxy) dibutylétain | | | | | |
|---|---|---|---|---|---|
| Exemple | concentration fonctions silane ($10^{-6}$ mol./g) | température (°C) | temps (mn) | conditions de greffage | concentration[a] fonctions silane après réaction ($10^{-6}$ mol./g) |
| 9 | 191,6 | 170 | 4 | à l'état fondu à 180°C | 182 |

(a) Dosage effectué par spectroscopie d'émission atomique du silicium sur le résidu de calcination du polymère (avant réticulation et après plusieurs cycles purification du polymère par dissolution dans du THF et reprécipitation par le méthanol).

On a utilisé les polymères ainsi modifiés pour les réticuler par réaction de condensation de leurs fonctions alcoxysilane en présence de l'eau. Le procédé est particulièrement adapté pour une réticulation de surface.

On peut également les utiliser :
- pour le greffage sur fibre de verre par réaction de condensation des fonctions alcoxysilane sur les fonctions Si-OH du verre ;
- pour une modification de la tension superficielle du polymère transformé.

Essais de réticulation des polymères modifiés

Le tableau IV rassemble les essais de réticulation des polymères modifiés (n° 1 à 9). Les matériaux modifiés selon les procédés décrits précédemment (essais en suspension et dry-blend) sont dissous dans le THF. Les films formés par évaporation du THF (essais en solution, en suspension et "dry-blend") ou par pressage (essai à l'état fondu) sont soumis pendant 2 à 72 heures suivant les essais, à un chauffage à 80°C ou 100°C dans une enceinte fermée en présence de vapeur d'eau. Les taux d'insoluble dans le tetrahydrofuranne (THF) caractérisent le degré de réticulation des matériaux. Les échantillons sont mis en solution à température ambiante dans le THF, après 48 heures d'immersion la solution est filtrée. La partie insoluble est séchée à l'étuve sous vide pendant 24 heures à 40°C. Le PVC soluble dans le THF est reprécipité au méthanol, filtré et séché à l'étuve sous vide pendant 24 heures à 40°C. Le taux d'insoluble est le rapport de la masse de polymère insoluble sur celle de l'échantillon de départ. (Le bilan massique est vérifié par le taux de polymère reprécipité sur celle de l'échantillon de départ).

TABLEAU IV

| Réticulation du PVC par réaction de condensation des fonctions alcoxysilane en présence d'eau | | |
|---|---|---|
| Produits greffés des exemples | Conditions de réticulation temps de séjour température de l'étuve | Taux d'insoluble |
| 1 | 10 heures à 80° C | 100 |
| 2 | " | 20 |
| 3 | " | 100 |
| 4 | " | 100 |
| 5 | 2 heures à 100° C | 80 |
| 6 | " | 95 |
| 9 | 4 heures à 100° C | 32 |
| 9 | 72 heures à 80° C | 45 |

Le tableau V rassemble les exemples d'hydroxylation du polychlorure de vinyle par un alcoolate organométallique hydroxylé de l'étain, le dihydroxy-1-éthoxy-2-étain dibutyle

Tableau V

| Hydroxylation du polychlorure de vinyle par un alcoolate organométallique hydroxylé de l'étain, le dihydroxy-1-éthoxy-2-étain dibutyle. | | | | | |
|---|---|---|---|---|---|
| Exemple | Conditions de greffage Réacteur | T(° C) | Ethylène glycol mole.kg$^{-1}$ | Oxyde de dibutylétain mole.kg$^{-1}$ | Fonction hydroxyle greffée mole.kg$^{-1}$ |
| 10 | malaxeur interne (4mn) | 200 | 0,483 | 0,186 | 0,34 |
| 11 | extrudeuse | 170 | 0,483 | 0,186 | 0,10 |
| 12 | extrudeuse + presse (10') | 170 200 | 0,483 | 0,186 | 0,19 |
| 13 | extrudeuse | 205 | 0,483 | 0,186 | 0,19 |

Les exemples 11, 12 et 13 ont été réalisés en extrudeuse double vis Weber type DS45, diamètre des vis 45 mm, longueur 15D, avec une température filière de 170° C pour les exemples 11 et 12, et de 205° C pour l'exemple 13.

Pour l'exemple 12, après extrusion, le mélange réactif a été chauffé sous presse pendant 10 minutes à 200° C.

Les quantités de fonctions hydroxyle greffées sur le polymère sont déduites de la quantité d'acide acétique formé par dégradation thermique dans une thermobalance avec une vitesse de montée en température programmée à 1,8° C, par minute de la température ambiante à 330° C après acétylation des fonctions alcool à l'aide de l'anhydride acétique. Ce dosage est réalisé sur le polymère purifié par mise en solution dans le tétrahydrofuranne et reprécipitation par le méthanol.

La quantité d'acide acétique formé est dosée par chromatographie en phase gazeuse à l'aide d'une colonne de verre de diamètre intérieur 8 mm, de longueur 1 m, avec une phase référence FFAP commercialisé par INTERSMAT, le gaz vecteur étant l'azote avec un débit de 50 ml par minute, le détecteur étant à ionisation de flamme, la pression d'hydrogène étant de 2,2 bars et la pression d'air de 1,8 bar.

Le tableau VI rassemble les exemples d'hydroxylation du polychlorure de vinyle par des composés hydroxyalkylaminoalkylétain. Les essais ont été conduits selon la technique dry blend (mélange à sec) en mélangeant le polymère et le réactif et en agitant le mélange tout en maintenant la température à 80° C durant une heure pour les essais 14 à 18 et durant 30 minutes pour l'essai 19.

Le dosage des fonctions hydroxyle pour les essais 14 à 18 est réalisé comme précédemment par dosage chromatographique de l'acide acétique libéré par dégradation thermique après acétylation des fonctions alcool à l'aide de l'anhydride acétique. Pour l'essai 19, la teneur en fonctions alcool est déduite du dosage de l'azote par analyse élémentaire.

**Tableau VI : <u>Hydroxylation du polychlorure de vinyle par les composés hydroxyalkylaminoalkylétain</u>.**

| Exemple | Composé hydroxyalkyl-aminoalkylétain | | Fonction hydroxyle greffé |
|---|---|---|---|
| | Nature | concentration mole.Kg$^{-1}$ | mole.Kg$^{-1}$ |
| 14 | $(Bu)_3SnNH-CH_2-CH_2OH$ | 0,3 | 0,11 |
| 15 | " | 2,0 | 0,12 |
| 16 | $(Bu)_2Sn(NH-CH_2-CH_2-OH)_2$ | 0,3 | 0,10 |
| 17 | " | 1,0 | 0,16 |
| 18 | $Bu\ Sn(NH-CH_2-CH_2-OH)_3$ | 0,66 | 0,15 |
| 19 | $(Bu)_2Sn(NH\ CH_2-CH_2-OH)_2$ | 0,31 | 0,36 |

Pour tous ces exemples, les composés hydroxyalkylaminoalkylétain dérivent de l'aminoéthanol et le groupement R lié à l'atome d'étain selon la présente invention est un radical butyle (Bu).

Le tableau VII rassemble les exemples d'hydroxylation des polychlorures de vinyle par des composés hydroxyalkylaminoalkylétain en suspension dans le dodécane. Dans ces conditions expérimentales, les chlorures d'alkylétain restent solubles dans le dodécane et peuvent être avantageusement recyclés pour régénérer l'agent hydroxylant après séparation du polymère hydroxylé. Leur séparation du polymère est un autre avantage du procédé en suspension en vue de certaines applications.

Pour ces exemples, l'agent hydroxylant est directement préparé dans le dodécane par réaction des chlorures d'alkylétain avec le méthylate de sodium, puis après avoir éliminé le chlorure de sodium, par réaction de l'aminoalcool sur le composé alcoxyorgano étain (alcoolate d'étain) et élimination du méthanol.

Pour l'exemple 20, le composé hydroxyaminoalkylétain dérive de la diéthanolamine et pour les exemples 21, 22 et 23, il dérive de l'éthanolamine. Pour les exemples 20 à 23 le groupement R lié à l'atome d'étain selon la présente invention est un radical butyle (Bu).

Pour l'exemple 20, la teneur en groupements hydroxyle greffés est évaluée par un dosage ultra-violet visible après avoir fait réagir le groupement alcool sur le naphtylisocyanate. Ce dosage est basé sur l'absorption du groupement naphtyle à 297 nm avec établissement d'une courbe d'étalonnage.

Pour les exemples 21, 22 et 23 la teneur en groupements hydroxyle gréffés est déduite du dosage par coulométrie des chlorures d'étain libérés dans le milieu réactionnel par la réaction de substitution des atomes de chlore conduisant au greffage.

Tous les polychlorures de vinyle hydroxylés selon l'invention, exemples 10 à 23, réticulent en présence d'un composé diisocyanate tel que l'hexaméthylène diisocyanate.

## TABLEAU VII

### HYDROXYLATION DU POLYCHLORURE DE VINYLE (PCV) PAR LES COMPOSES HYDROXYALKYL-AMINOALKYLETAIN EN SUSPENSION DANS LE DODECANE

| Exemple N° | Agent hydroxylant Nature | concentration g/l | Concentration du PCV g/l | Température °C | Durée mn | Fonction hydroxyle greffée mole/kg |
|---|---|---|---|---|---|---|
| 20 | $Bu_3Sn-N(CH_2-CH_2-OH)_2$ | 173 | 280 | 130 | 120 | 0,62 |
| 21 | $Bu_2Sn(NH-CH_2-CH_2-OH)_2$ | 94 | 330 | 140 | 90 | 0,37 |
| 22 | $Bu_3Sn-NH-CH_2-CH_2-OH$ | 185 | 330 | 130 | 90 | 0,20 |
| 23 | $Bu_3Sn-NH-CH_2-CH_2-OH$ | 185 | 330 | 130 | 120 | 0,65 |

## Revendications

1.  Procédé de fonctionnalisation de (co)polymères chlorés caractérisé en ce que l'on fait réagir à une température de 50 à 250°C ledit (co)polymère chloré avec un dérivé organométallique de formule (I)

9

$(R)_n M(AR_1 B)_{m-n}$ dans laquelle :

M représente un atome d'étain, de plomb, d'antimoine ou de bismuth

A représente un groupement $NR_3$ dans lequel $R_3$ représente un atome d'hydrogène ou un radical-$R_1$ B ou A représente un atome d'oxygène

m est égal à 4 et n égal à 1, 2 ou 3 lorsque M représente l'étain ou le plomb

m est égal à 5 et n égal à 1, 2, 3 ou 4 lorsque M représente l'antimoine ou le bismuth

R représente un radical alcoyle linéaire ou ramifié renfermant de 1 à 8 atomes de carbone, un radical cycloalcoyle renfermant de 3 à 12 atomes de carbone, un radical aryle renfermant de 6 à 14 atomes de carbone eventuellement substitué, un radical aralcoyle renfermant de 7 à 14 atomes de carbone éventuellement substitué ou un radical cycloalcoylalcoyle renfermant de 4 à 8 atomes de carbone, $R^1$ représente un radical alcoyle linéaire ou ramifié renfermant de 1 à 20 atomes de carbone, un radical aralcoyle renfermant de 7 à 14 atomes de carbone, un radical cycloalcoyle renfermant de 3 à 12 atomes de carbone, un radical cycloalcoylalcoyle renfermant de 4 à 8 atomes de carbone éventuellement substitué ou un radical arylcycloalcoyle renfermant de 7 à 20 atomes de carbone ou une chaîne polymère, ledit radical $R_1$ étant éventuellement fonctionnalisé, et

B représente un radical $Si(OR_2)_3$, $R_2$ pouvant prendre les valeurs de R ci-dessus, ou un radical $(OH)_x$ dans lequel x représente un nombre entier pouvant prendre les valeurs de 1 à 100.

2. Procédé selon la revendication 1 caractérisé en ce que le dérivé organométallique est un dérivé de l'étain.

3. Procédé selon l'une quelconque des revendications 1 ou 2 caractérisé en ce que le (co)polymère chloré de départ est le PVC.

4. Procédé selon l'une quelconque des revendications 1 à 3 caractérisé en ce que la réaction est menée entre 50 à 150°C en suspension dans un solvant hydrocarboné et en présence du dérivé de formule I, dans laquelle A représente un groupement aminé.

5. Procédé selon l'une quelconque des revendications 1 à 4 caractérisé en ce que la réaction est menée à une température de 50 à 150°C, selon une technique "dry-blend" dans le cas où A est un groupement aminé.

6. Procédé selon l'une quelconque des revendications 1 à 3 caractérisé en ce que la réaction est menée de 170 à 210°C en l'absence de solvant en milieu fondu.

7. Procédé selon l'une quelconque des revendications 1 à 4 caractérisé en ce que la réaction est menée à une température de 50 à 150°C sur le (co)polymère chloré déjà conformé dans le cas où A est un groupement aminé..

8. Compositions caractérisées en ce qu'elles renferment un (co)polymère et un dérivé de formule I selon la revendication 1.

9. Compositions hydroxylables, caractérisées en ce qu'elles renferment un(co)polymère chloré, un oxyde organométallique et un polyol en excès molaire par rapport audit oxyde organométallique.

10. Compositions hydroxylables, caractérisées en ce qu'elles renferment un(co)polymère chloré, un halogénure organométallique et un alcoolate alcalin ou alcalinoterreux.

11. Compositions selon la revendication 8, caractérisées en ce qu'elles renferment un (co)polymère chloré et un dérivé de la formule I qui est un trialcoxysilane d'alcoylamino organoétain ou un trialcoxysilane d'alcoxyorganoétain.

12. Objets conformés, caractérisés en ce qu'ils comprennent une composition selon l'une des revendications 8, 9 10 ou 11.

13. Objets conformés, caractérisés en ce qu'ils comprennent un produit obtenu par le procédé selon l'une quelconque des revendications 1 à 7.

## EP 0 461 246 B1

**Claims**

1. Functionalization process for chlorinated (co)polymers characterized in that said chlorinated (co)-polymer is reacted at a temperature of 50 to 250°C with an organometallic derivative of formula (I) (R)-$_n$M(AR$_1$B)m-n in which:
   M represents a tin, lead, antimony or bismuth atom
   A represents an NR$_3$ group in which R$_3$ represents a hydrogen atom or an R$_1$B radical or A represents an oxygen atom,
   m is equal to 4 and n is equal to 1, 2 or 3 when M represents tin or lead,
   m is equal to 5 and n is equal to 1, 2, 3 or 4 when M represents bismuth or antimony,
   R represents a linear or branched alkyl radical containing 1 to 8 carbon atoms, a cycloalkyl radical containing 3 to 12 carbon atoms, an optionally substituted aryl radical containing 6 to 14 carbon atoms, an optionally substituted aralkyl radical containing 7 to 14 carbon atoms or a cycloalkylalkyl radical containing 4 to 8 carbon atoms, R$_1$ represents a linear or branched alkyl radical containing 1 to 20 carbon atoms, an aralkyl radical containing 7 to 14 carbon atoms, a cycloalkyl radical containing 3 to 12 carbon atoms, an optionally substituted cycloalkylalkyl radical containing 4 to 8 carbon atoms or an arylcycloalkyl radical containing 7 to 20 carbon atoms or a polymer chain, said R$_1$ radical being optionally functionalized, and
   B represents an -Si (OR$_2$)$_3$ radical, R$_2$ being able to take the values of R above, or an (OH)$_x$ radical in which x represents an integer which can take values from 1 to 100.

2. Process according to claim 1 characterized in that the organometallic derivative is a tin derivative.

3. Process according to any one of claims 1 or 2 characterized in that the initial chlorinated (co)polymer is PVC.

4. Process according to any one of claims 1 to 3 characterized in that the reaction is conducted between 50 and 150°C in suspension in a hydrocarbon solvent and in the presence of a derivative of formula I, in which A represents an amino group.

5. Process according to any one of claims 1 to 4 characterized in that the reaction is conducted at a temperature of 50 to 150°C, according to the "dry-blend" technique in the case where A is an amino group.

6. Process according to any one of claims 1 to 3 characterized in that the reaction is conducted at 170 to 210°C in the absence of a solvent in the molten state.

7. Process according to any one of claims 1 to 4 characterized in that the reaction is conducted at a temperature of 50 to 150°C on the already-shaped chlorinated (co)polymer in the case where A is an amino group.

8. Compositions characterized in that they contain a (co)polymer and a derivative of formula I according to claim 1.

9. Hydroxylable compositions, characterized in that they contain a chlorinated (co)polymer, an organometallic oxide and a polyol in molar excess relative to said organometallic oxide.

10. Hydroxylable compositions, characterized in that they contain a chlorinated (co)polymer, an organometallic halide and an alkaline or alkaline-earth alcoholate.

11. Compositions according to claim 8, characterized in that they contain a chlorinated (co)polymer and a derivative of formula I which is an alkylamino organotin trialkoxysilane or an alkoxyorganotin trialkoxysilane.

12. Shaped objects, characterized in that they contain a composition according to one of claims 8, 9, 10 or 11.

11

**13.** Shaped objects, characterized in that they contain a product obtained by the process according to any one of claims 1 to 7.

**Patentansprüche**

**1.** Verfahren zum Funktionalisieren von chlorierten (Co)Polymeren, dadurch gekennzeichnet, daß man das chlorierte (Co)polymer bei einer Temperatur von 50 bis 250°C mit einem Organometall-Derivat der Formel (I)

$(R)_n M(AR_1 B)m\text{-}n$

umsetzt, worin
M ein Zinn-, Blei-, Antimon- oder Bismutatom ist,
A eine $NR_3$-Gruppe bedeutet, in welcher $R_3$ ein Wasserstoffatom oder einen Rest $R_1 B$ bedeutet, oder A ein Sauerstoffatom bedeutet,
m gleich 4 ist und n gleich 1, 2 oder 3 ist, wenn M Zinn oder Blei bedeutet,
m gleich 5 ist und n gleich 1, 2, 3 oder 4 ist, wenn M Antimon oder Bismut bedeutet,
R einen linearen oder verzweigten Alkylrest mit 1 bis 8 C-Atomen, einen Cycloalkylrest mit 3 bis 12 C-Atomen, einen gegebenenfalls substituierten Arylrest mit 6 bis 14 C-Atomen, einen gegebenenfalls substituierten Aralkylrest mit 7 bis 14 C-Atomen oder einen Cycloalkylalkylrest mit 4 bis 8 C-Atomen bedeutet,
$R_1$ einen linearen oder verzweigten Alkylrest mit 1 bis 20 C-Atomen, einen Aralkylrest mit 7 bis 14 C-Atomen, einen Cycloalkylrest mit 3 bis 12 C-Atomen, einen gegebenenfalls substituierten Cycloalkylalkylrest mit 4 bis 8 C-Atomen oder einen Arylcycloalkylrest mit 7 bis 20 C-Atomen oder eine polymere Kette bedeutet, wobei der Rest $R_1$ gegebenenfalls funktionalisiert ist, und
B einen Rest $Si(OR_2)_3$ bedeutet, wobei $R_2$ die obigen Bedeutungen von R annehmen kann, oder ein Rest $(OH)_x$ ist, in welchem x eine ganze Zahl bedeutet, die einen Wert von 1 bis 100 haben kann.

**2.** Verfahren nach Anspruch 1, dadurch gekennzeichnet, daß das Organometall-Derivat ein Derivat von Zinn ist.

**3.** Verfahren nach einen der Ansprüche 1 oder 2, dadurch gekennzeichnet, daß das chlorierte Ausgangs-(co)polymer PVC ist.

**4.** Verfahren nach einem der Ansprüche 1 bis 3, dadurch gekennzeichnet, daß die Reaktion zwischen 50 und 150°C in Suspension in einem Kohlenwasserstofflösungsmittel und in Gegenwart des Derivates der Formel I durchgeführt wird, in welchem A eine aminierte Gruppe bedeutet.

**5.** Verfahren nach einem der Ansprüche 1 bis 4, dadurch gekennzeichnet, daß die Reaktion bei einer Temperatur zwischen 50 und 150°C nach einer "Trockengemisch"-("dry blend")-Technik durchgeführt wird, wenn A eine aminierte Gruppe ist.

**6.** Verfahren nach einem der Ansprüche 1 bis 3, dadurch gekennzeichnet, daß die Reaktion bei 170 bis 210°C in Abwesenheit von Lösungsmittel in geschmolzenem Medium durchgeführt wird.

**7.** Verfahren nach einem der Ansprüche 1 bis 4, dadurch gekennzeichnet, daß die Reaktion bei einer Temepratur von 50 bis 150°C an einem bereits geformten chlorierten (Co)polymer durchgeführt wird, wenn A eine aminierte Gruppe ist.

**8.** Zusammensetzungen, dadurch gekennzeichnet, daß sie ein (Co)polymer und ein Derivat der Formel I nach Anspruch 1 aufweisen.

**9.** Hydroxylierbare Zusammensetzungen, dadurch gekennzeichnet, daß sie ein chloriertes (Co)polymer, ein Organometalloxid und ein Polyol in molarem Überschuß, bezogen auf das Organometalloxid, aufweisen.

**10.** Hydroxylierbare Zusammensetzungen, dadurch gekennzeichnet,, daß sie ein chloriertes (Co)polymer, ein Organometallhalogenid und ein Alkali- oder Erdalkalialkoholat aufweisen.

11. Zusammensetzungen nach Anspruch 8., dadurch gekennzeichnet, daß sie ein chloriertes (Co)polymer und ein Derivat der Formel I aufweisen, das ein Alkylaminoorganozinn -trialkoxysilan oder ein Alkoxyorganozinn-trialkoxysilan ist.

12. Geformte Gegenstände, dadurch gekennzeichnet, daß sie eine Zusammensetzung nach einem der Ansprüche 8, 9, 10 oder 11 umfassen.

13. Geformte Gegenstände, dadurch gekennzeichnet, daß sie ein Produkt umfassen, das nach einem Verfahren gemäß einem der Ansprüche 1 bis 7 erhalten worden ist.